(19) **Europäisches Patentamt / European Patent Office / Office européen des brevets**

(11) **EP 4 671 348 A1**

(12) **EUROPEAN PATENT APPLICATION**

(43) Date of publication:
**31.12.2025 Bulletin 2026/01**

(21) Application number: **24184033.9**

(22) Date of filing: **24.06.2024**

(51) International Patent Classification (IPC):
*C10G 1/00* (2006.01)

(52) Cooperative Patent Classification (CPC):
**C10G 1/002; C10G 1/02;** C10G 2400/20

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Nederlandse Organisatie voor toegepast-natuurwetenschappelijk Onderzoek TNO**
**2595 DA 's-Gravenhage (NL)**

(72) Inventor: **The designation of the inventor has not yet been filed**

(74) Representative: **Nederlandsch Octrooibureau**
**P.O. Box 29720**
**2502 LS The Hague (NL)**

(54) **PROCESS FOR THE PRODUCTION OF HIGH VALUE CHEMICALS FROM BIOMASS**

(57) The current invention concerns a method of indirect gasification of biomass with a low oxygen (O) content such as torrefied biomass or lipid-rich biomass. By indirect gasification of this biomass at a relatively low temperature and at a relatively low residence time of the product gas, the method yields in a product gas which comprises syngas with a high olefin content. The invention furthermore concerns the use of biomass with a low oxygen (O) content for this purpose.

Fig. 1

## Description

### Field of the invention

The present invention relates to a method for indirect gasification of biomass with a low oxygen (O) content, which allows to obtain high yields of amongst others of olefins.

### Background art

Gasification is a thermal process that converts a solid material into a gaseous product which can then be further processed into several different products such as chemicals, fuels, heat or energy. Typically, this is achieved by reacting the feedstock material at high temperatures (>700 °C), without combustion, via controlling the amount of oxygen ($O_2$) and/or steam present in the reaction. The resulting gas mixture is called syngas (from synthesis gas) or product gas and is itself a fuel due to the flammability of the $H_2$ and CO of which the gas is largely composed. Power can be derived from the subsequent combustion of the resultant gas and is considered to be a source of renewable energy if the gasified compounds were obtained from biomass feedstock. Gasification is a stage of a biomass devolatilization process. The devolatilization process involves release of volatiles (gases and tars) from a solid organic material (e.g., biomass) as it undergoes thermal decomposition.

US2023/0234843A1 describes methods and systems for producing carbon-negative hydrogen and renewable natural gas from biomass. In an embodiment, the method includes gasification of biomass in a gasification unit to form a first stream comprising syngas. The syngas may include methane, hydrogen, carbon dioxide, carbon monoxide, ethene, and water. The method may also include reacting the carbon monoxide with water in the presence of a catalyst to form a second stream.

WO2012/059938A1 describes a process for obtaining petrochemical products from a carbonaceous feedstock (coal). The carbonaceous feedstock is pulverized and fed to a pyrolysis reactor where it is pyrolyzed at 700-1000 °C at a pressure of 2-25 bar for 2-10 seconds.

Indirect gasification is defined as gasification where heat production takes place outside the reactor where heat is needed. That means that gasification and combustion take place in different reactors, mass and energy being transferred between them. The gasification is without an $O_2$ feed, whilst combustion is obviously with an $O_2$ feed. Such a process has been implemented and used in a reactor for producing a product gas from a fuel, developed by the applicant. The reactor and the process are described in WO2014/070001A1.

WO2016/091828A1 describes gasification of a biomass in the aforementioned reactor. A fuel is input into a pyrolysis chamber and a pyrolysis process is executed for obtaining a product gas. Parts of the fuel exiting from the pyrolysis chamber are recirculated to a combustion chamber. In the combustion chamber a gasification process is executed in a fluidized bed, using a primary process fluid, followed by a combustion process in an area above the fluidized bed, using a secondary process fluid.

As olefins production predominately dependents on fossil resources, their production is limited by the finite reserves and the associated economic and environmental concerns. The need for alternative routes for olefin production is imperative to meet the exceedingly high demand, worldwide.

### Summary of the invention

Albeit gasification of biomass in the absence of $O_2$ typically is used for producing syngas, the current inventors surprisingly found that the process can be modified to produce significant amounts of olefins in addition to syngas. In the art olefins are considered undesirable side products during indirect gasification as the formation of olefins lowers the yield of syngas. This is especially so since the amount of olefins that is formed in conventional indirect gasification is low, and therefore olefins are seen as a contamination and not as valuable feedstock.

In contrary, the inventors now have identified olefins are a valuable feedstock and found a surprising method to generate relevant amounts of olefins from the indirect gasification of biomass. The inventors surprisingly found that for an indirect gasification process the level of oxygen (O) that is present in the biomass, negatively affects the formation of olefins. The O typically is covalently bound in the biomass. Below a critical limit of 40 wt.% O on total of the dry and ash free weight of the biomass the formation of olefins significantly increases. Therefore, next to syngas olefins can beneficially be obtained as a main product from the indirect gasification of biomass, not only as a byproduct in small amounts. Not bound by theory the inventors believe that when gasifying biomass with a high O content the oxygen (O) present in the biomass oxidizes the carbon present in the biomass to such extent that no relevant amounts of olefins are formed. The examples demonstrate that a relative high amount of O such as present in waste wood results in low amounts of olefins whilst at a relative low amount of O such as in black pellets or lipid-rich biomass significant amounts of olefins are formed. Preferably, the olefins comprise ethene and/or propene.

A source of biomass with a relative low amount of O can be a lipid-rich biomass such as exhausted olive pomace. Alternatively suitable biomass may also be obtained by pretreatment of the biomass, for example by torrefaction of the biomass.

The inventors furthermore found that the temperature in the gasification reactor and the residence time of the product gas was relevant for the formation of olefins. At relatively low temperatures such as in the range of 600-900 °C and at relatively low average residence times of the product gas in the gasification reactor of less than 10 seconds significant amounts of olefins, such as ethene and propene are formed. Without being bound by theory, the inventors believe that indirect gasification under these conditions help to avoid conversion of ethene and propene into other products. The formation of preferred olefins can be steered by varying the temperature and residence time within the mentioned time and temperature ranges. Moreover, the inventors believe the relative long fatty acid chains in lipid rich biomass are a good starting material for forming olefins under these reaction conditions. Under the reaction conditions the long aliphatic will be broken down into olefins. The same applies for torrefied biomass which when being gasified under these reaction conditions will form a considerable amount of olefins.

The gasification of the invention is indirect gasification. Preferably the gasification is in a gasification reactor where the biomass is indirectly gasified. Preferably the solid and liquid remnants after gasification which is named the treated biomass are provided to a combustion section wherein the heat generated by combustion is used to provide the necessary heat for the gasification process. The main advantage of this system is that it allows the operation to occur without the use of $O_2$ (or air) in the gasification process, resulting in a product gas low in $N_2$. Moreover, at least a part or all of the combustion heat is used efficiently to heat the feed, which is fed to the gasification reactor, as no heat exchanger is needed. In a preferred embodiment the system comprises a riser, where the gasification occurs and a combustion reactor, where the remaining char is burned. The riser is separated from the combustion reactor. The product gas, which is obtained in the riser, flows through settling chamber, exits the gasification reactor and then reaches a gas collector. Before the exit, remaining char is separated from the product gas in a settling chamber. Then the separated char is fed to the combustion reactor through a downcomer, which operates in the opposite direction of the riser.

**Detailed Description**

The present invention provides a method for indirect gasification of biomass with a low oxygen (O) content, comprising:

a) providing a biomass feed with a low oxygen (O) content to a gasification reactor,
b) indirect gasification of the biomass with a low oxygen (O) content at a temperature in the range of 600-900 °C thereby obtaining a product gas and a treated biomass,

wherein the product gas comprises at least 7 vol.% olefins based on total volume of dry and $N_2$-free product gas and wherein the average residence time of the product gas in the gasification reactor does not exceed 10 seconds and wherein the biomass with a low oxygen (O) content comprises less than 40 wt.% O on total dry and ash free weight of the biomass.

In a further embodiment of the invention the invention concerns the use of biomass with a low oxygen (O) content for producing a product gas comprising olefins, wherein the biomass is provided to a gasification reactor and wherein the biomass is indirectly gasified in the gasification reactor at a temperature in the range of 600-900 °C thereby obtaining the product gas and a treated biomass, wherein the product gas comprises at least 7 vol.% olefins based on total volume of dry and $N_2$-free product gas and wherein the average residence time of the product gas in the gasification reactor does not exceed 10 seconds and wherein the biomass with a low oxygen (O) content comprises less than 40 wt.% O on total dry and ash free weight of the biomass.

In a further embodiment of the invention the invention concerns the use of biomass with a low oxygen (O) content for producing olefins, wherein the biomass is provided to a gasification reactor and wherein the biomass is indirectly gasified in the gasification reactor at a temperature in the range of 600-900 °C thereby obtaining the product gas and a treated biomass, wherein the product gas comprises at least 7 vol.% olefins based on total volume of dry and $N_2$-free product gas and wherein the average residence time of the product gas in the gasification reactor does not exceed 10 seconds and wherein the biomass with a low oxygen (O) content comprises less than 40 wt.% O on total dry and ash free weight of the biomass.

In another embodiment of the invention the invention concerns the use of biomass with a low oxygen (O) content for producing syngas and olefins, wherein the biomass is provided to a gasification reactor and wherein the biomass is indirectly gasified in the gasification reactor at a temperature in the range of 600-900 °C thereby obtaining the product gas and a treated biomass, wherein the product gas comprises at least 7 vol.% olefins based on total volume of dry and $N_2$-free product gas and comprises syngas and wherein the average residence time of the product gas in the gasification reactor does not exceed 10 seconds and wherein the biomass with a low oxygen (O) content comprises less than 40 wt.% O on total dry and ash free weight of the biomass.

In a preferred embodiment the product gas comprises syngas, preferably the product gas comprises at least 15 vol.% of the sum of CO and $CO_2$ based on total volume of dry and $N_2$ free product gas, preferably at least 15 vol.% CO based on total volume of dry and $N_2$ free product gas.

*General Definitions*

In this document and in its claims, the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the elements is present, unless the context clearly requires that there be one and only one of the elements. The indefinite article "a" or "an" thus usually means "at least one". The word "about" or "approximately" when used in association with a numerical value (e.g. about 10) preferably means that the value may be the given value more or less 1% of the value.

The present invention has been described above with reference to a number of exemplary embodiments. Modifications and alternative implementations of some parts or elements are possible and are included in the scope of protection as defined in the appended claims. All citations of literature and patent documents are hereby incorporated by reference.

Olefins are acyclic hydrocarbons with one double bond. Olefins are also named alkenes. In a preferred embodiment of the invention the olefin is one or more of ethene, propene, 1-butene, 2-butene, 1,3-butadiene and isobutylene. Olefins are typical building blocks for other chemicals such as polymers.

With the term "olefin-rich" within the meaning of this application is understood that product gas comprises at least 7 vol.% olefins based on total volume of dry and $N_2$-free product gas, preferably at least 10 vol.%, more preferably at least 15 vol.%. Preferably, the product gas comprises 7-40 vol.% olefins, more preferably 10 - 30 vol.%, even more preferably 10 - 20 vol.% based on total volume of dry and $N_2$-free product gas.

Within this document, the term "biomass" is understood as the biodegradable fraction of products, waste and residues from agriculture (including vegetal and animal substances), from forestry (such as woody biomass, such as oak wood, saw dust, spruce wood, wood chips, pine chips, olive tree wood), from animal and human waste, as well as the biodegradable fraction of industrial and municipal waste and aquatic biomass.

Biomass is a term used to describe any biologically produced matter. Biomass includes both the above- and belowground tissues of plants, for example, leaves, twigs, branches, boles, roots of trees and rhizomes of grasses. The chemical energy contained in biomass is derived from solar energy using the natural process of photosynthesis. This is the process by which plants take in carbon dioxide and water from their surroundings and, using energy from sunlight, convert them into sugars, starches, cellulose, hemicellulose, and lignin. Biomass is useful in that it is, effectively, stored solar energy. Biomass is the only renewable source of carbon.

Oxygen in the art refers both to the element oxygen represented by the symbol O and to molecular oxygen $O_2$. In the current document, when by oxygen the element oxygen is meant, the symbol O is used and/or O is put between brackets after the word oxygen; oxygen (O), when molecular oxygen is discussed, the symbol $O_2$ is used and/or $O_2$ is put between brackets after the word oxygen; oxygen ($O_2$).

The term "biomass with low oxygen (O) level" within the meaning of this invention is understood as a biomass, which comprises less than 40 wt.% oxygen (O) on total dry and ash free weight of the biomass, preferably less than 37 wt.% oxygen (O) on total dry weight of the biomass. The biomass with low oxygen (O) level preferably comprises 10-40 wt.% oxygen (O) on total dry and ash free weight of the biomass, more preferably 15-35 wt.% oxygen (O) on total dry and ash free weight of the biomass. In a preferred embodiment the biomass with low oxygen (O) level comprises 10-30 wt.% oxygen (O) on total dry and ash free weight of the biomass, preferably 15-30 wt.%. The inventors found that for a lower oxygen content, the olefins yield is higher.

The term "lipid-rich biomass" within the meaning of this invention is understood as biomass, which comprises at least 2 wt.% lipids on total weight of dry biomass. The lipid-rich biomass preferably comprises 2-30 wt.%, more preferably 4-25 wt.%, even more preferably 5-15 wt.%. lipids on total dry weight of the lipid-rich biomass. Preferably, the lipids are fats.

Black pellets is torrefied biomass. Black pellets may comprise some additives. Black pellets typically have a cylindrical form, a length of 5 to 40 mm, a diameter up to 25 mm and broken ends. A common raw material of black pellets is sawdust, but any biomass can be made into black pellets.

Char is degasified biomass particles - the solid material that remains after light gases and tar have been driven out or released from a biomass during the initial stage of indirect gasification.

In the current document preferred embodiments are disclosed. These embodiments extend to all the methods and all uses of the invention.

*The gasification system*

The method of indirect gasification of the invention may be performed in any type of gasification reactor (See Fig.

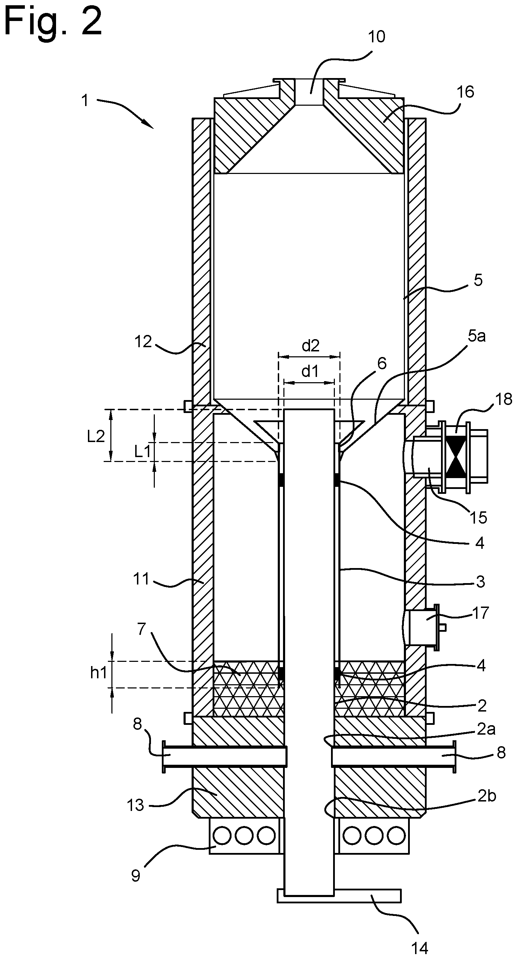

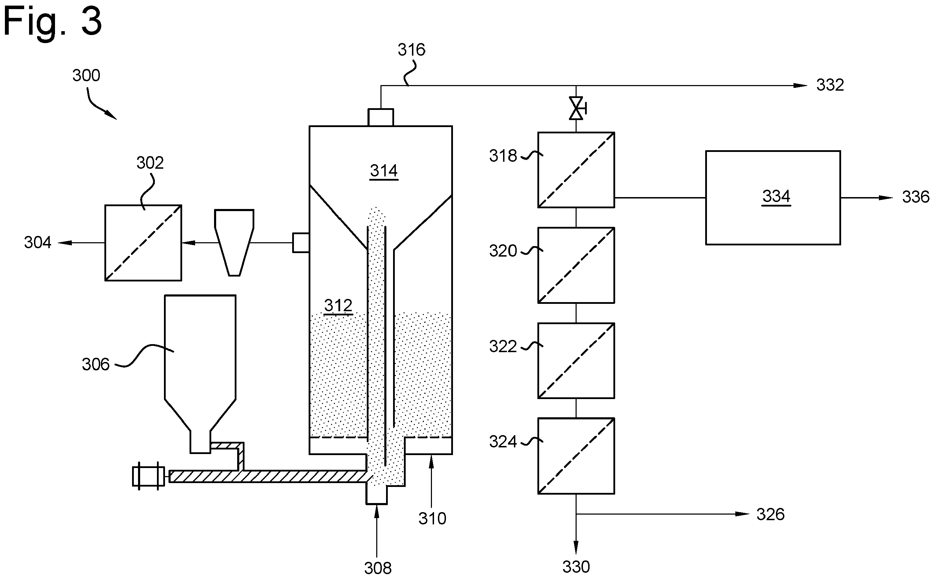

1-3 as examples). In a preferred embodiment the method of indirect gasification is carried out in a following gasification system 300 (Fig. 3). The preferred gasification system comprises the gasification reactor 314, a separate combustion reactor 312, which is equipped with openings for circulation of air 310, a separate feedstock container 306, a supply opening for supplying a feedstock, a discharge opening for the discharging of the product gas 316, at least one filter 318, 320 and at least one gas collector 326, 336. In a preferred embodiment the gasification reactor comprises a riser, where fast devolatilization and gasification reactions of the biomass feedstock take place, and a settling chamber preferably in a form of cyclone. Both riser and the settling chamber preferably have the same temperature. The feedstock container 306 is connected to the gasification reactor and a feedstock is supplied to the riser via supply opening. A carrier gas is also provided to the riser to ensure more effective transport and conversion of the biomass feedstock. The riser is surrounded by the separate combustion chamber 312, where heat is produced. The riser is heated by the heat from the combustion chamber 312. By creating a gasification process and combustion process separately, a more efficient operation can be provided. In the result of the heating, gasification reactions of the feedstock take place in the riser and as a result of these reactions a product gas is produced. The product gas together with a char flows through the settling chamber. After leaving the riser at its top end, the product gas and char are separated from one another in the settling chamber. The product gas flows to the discharge opening 316. The remaining char through a downcomer is recirculated to the combustion reactor 312 and burned there. One example of the gasification reactor that can be used to perform the method of the invention is shown in Figure 2.

In one embodiment of the invention the combustion reactor is a fluidized bed. In this embodiment carrier gas acts as fluidisation gas, which can control a circulation rate of a bed material. The fluidizing gas is preferably steam. However, the carrier gas or the fluidizing gas can be steam or any kind of a permanent gas, such as CO, $CO_2$ or $H_2$. A circulating bed material (e.g. sand or olivine) is used to transport the heat from the combustion reactor to the gasification reactor and the char from the gasification reactor to the combustion reactor. Air is used for the combustion of char. In this embodiment small amount of superheated steam is added from below to create a fluidized region for the circulating bed material. Hot bed material (typically sand or olivine of 0.2 - 0.3 mm) enters the riser from the combustion reactor through a hole in the riser (opposite and just above of the supply opening). The volume created by the gas from the biomass increases the vertical gas flow and therewith creates a "turbulent fluidization" regime in the riser. The bed material is blown out of the riser together with the degassed biomass particles (char). The vertical velocity of the gas is reduced in the settling chamber, causing the larger solids (bed material and char) to separate from the gas and fall down into the downcomer.

The internal circulation of bed material between the combustion reactor and the riser ensures the heat transport. The main advantage of this system is that it allows the operation to occur without the use of $O_2$ (or air) in the gasification process, resulting in a product gas low in $N_2$.

*Biomass*

In the context of the invention biomass with low oxygen (O) level, as defined above, is used.

In a preferred embodiment the biomass of the invention is torrefied biomass and/or a lipid-rich biomass. The lipid-rich biomass preferably is selected from the list of olive pomace preferably exhausted olive pommace, sunflower husks, cashew shells, coconut shells, rapeseed residues and any combination thereof. Preferably, the lipid-rich biomass is olive pomace, preferably exhausted olive pomace. Exhausted olive pomace as used herein is a waste stream from the production of olive oil.

In the context of the invention, in a preferred embodiment the biomass receives a pretreatment before being fed to the gasification reactor. Pretreated biomass is a species of biomass. A preferred pretreatment is torrefaction, a preferred biomass is therefore torrefied biomass, Torrefied biomass is also named black pellets. Torrefaction is a technology known in the art. Torrefaction is a process in which biomass is heated in the absence of $O_2$. Compared to gasification the temperature during torrefaction is much lower and the residence time is longer. This results in that most of the biomass is still present in solid form after the torrefaction. In addition, although some of the oxygen (O) is removed from the biomass during torrefaction, the biomass after torrefaction still comprises a significant amount of oxygen (O). Torrefaction concerns heating biomass to a temperature in the range of 100-350 °C, preferably in the range of 150-320 °C, more preferably in the range of 150 - 300°C, for 1-300 minutes, preferably 10-90 minutes, more preferably for 15-60 minutes in the absence of $O_2$. Preferably the torrefied biomass is torrefied at a temperature in the range of 100-350 °C, preferably in the range of 150-320 °C, more preferably in the range of 150 - 300°C, for 1-300 minutes, preferably 10-90 minutes, more preferably for 15-60 minutes. Preferably the torrefied biomass is sewage sludge.

The biomass may undergo drying before torrefaction however also torrefaction processes are known in which the biomass is heated in the presence of water (WO 2013/162355 A1) which is named wet torrefaction. Preferably the torrefaction is wet torrefaction. Typically, during or after torrefaction water is removed from the torrefied biomass. The elevated temperature during torrefaction leads to decomposition of biomass components. Low-energy components are transferred to the gas phase.

In a preferred embodiment for method for indirect gasification of biomass or for the use of biomass according to the invention in a step before that the biomass is fed to the gasification reactor, the biomass is torrefied, preferably wherein the torrefaction comprises heating the biomass in the absence of $O_2$ to a temperature in the range of 100-350 °C, preferably in the range of 150-320 °C more preferably in the range of 150 - 300°C, for 1-300 minutes, preferably 10-90 minutes, more preferably for 15-60 minutes.

*Method for obtaining an olefin-rich product gas*

In a preferred embodiment the biomass is provided to the gasification reactor together with a carrier gas. The carrier gas acts as a gasification agent, which allows the feedstock to be quickly converted into gas by means of different heterogeneous reactions. When the carrier gas is added to the gasification reactor it thereby controls the heat transfer rate during operation. If a part of the reactor becomes blocked or partially blocked, the carrier gas helps to overcome this issue without modifying or cleaning the reactor. The carrier gas is preferably $O_2$ free to avoid combustion of the carbon present in the biomass. The carrier gas is preferably steam. Steam has a limited effect to reactions occurring during the indirect gasification. Furthermore, any remaining steam can be easily separated from product gas by condensation. In a preferred embodiment the gasification reactor comprises a riser and a settling chamber. The biomass is provided to the riser, preferably together with an carrier gas that is preferably $O_2$-free.

The steam to carbon ratio is the ratio of kilograms of steam to kilograms of dry and ash free biomass that is fed to the gasification reactor. The moisture that is present in the biomass is counted as steam. In case steam is added to the gasification reactor, preferably, the steam to carbon ratio is in the range of 0.1-2 kg/kg, more preferably 0.4-1.5 kg/kg, even more preferably in the range of 0.6-1.2 kg/kg.

For the current invention, the biomass is gasified at a temperature in the range of 600 to 900 °C, preferably the biomass is gasified at a temperature in the range of 650-850 °C, even more preferably in the range of 675-825 °C even more preferably in the range of 700-800 °C, even more preferably in the range of 700-775 °C. In a conventional indirect gasification process gasification typically occurs at higher temperatures. The gasification temperature influences the product gas composition, the amount and composition of the tar in the gas, and the conversion of the fuel in the gasifier. The mechanism of gasification starts with thermochemical degradation of biomass to $H_2$, CO, $CO_2$, and light hydrocarbons, such as $CH_4$, $C_2H_4$, and $C_2H_6$. With the increase of gas residence time, polyaromatic hydrocarbon content also increases. By maintaining a lower temperature and limiting the gas residence time in the gasification system, it is possible to stop the gasification reaction at a desirable stage, when olefins are formed. In a preferred embodiment the biomass is gasified at a temperature in the range of 650-800 °C, even more preferably in the range of 675-750 °C. At these temperatures a relatively high yield of propene is obtained. In a preferred embodiment the biomass is gasified at a temperature in the range of 700-850 °C, even more preferably in the range of 725-825 °C. At these temperatures a relatively high yield of ethene is obtained.

The average residence time of the treated biomass in the gasification reactor from the moment the biomass feedstock enters the riser and to the moment when the product gas exits the gasification reactor via the discharge opening preferably is in the range of 1 to 10 seconds. More preferably, the average residence time of the treated biomass in the gasification reactor is in the range of 2 to 8 seconds, more preferably, in the range of 3 to 7 seconds.

In a preferred embodiment at least a part of the treated biomass is combusted, and at least a part of the combustion heat is used to heat the feed to the gasification reactor. Even more preferably, all heat for the indirect gasification process is produced by the combustion of the treated biomass, tar and dust in the combustor, therefore no additional heat input is required. Partly or fully recycling the treated biomass improves the effectivity of the indirect gasification process both in terms of the yield and economical efficiency.

In the method of indirect gasification of the invention the gasification is an indirect gasification. An indirect gasification takes place without the aid of a carrier gas that partially oxidizes the feed material, as it is in the case of direct gasification. Indirect gasification is gasification wherein no carrier gas is provided or wherein the $O_2$ concentration in the carrier gas is less than 5 mol% on total of the carrier gas, preferably less than 1 mol%, more preferably less than 0.1 mol%, even more preferably wherein the carrier gas does not comprise $O_2$. During direct gasification, to maintain the temperature of the process, oxidation reaction supplies the required energy. For an indirect gasification, no $O_2$ is provided to the gasification reactor. During indirect gasification, the heat is supplied by external sources, like heated bed materials, burning chars or gases.

Gas residence time plays a significant role in the gasification process. It will determine to what extent consecutive reactions can take place at certain temperature. Typically, the significant concentrations of CO and $H_2$ are formed when residence time does not exceed 5 seconds. If CO and $H_2$ concentrations are increased after 5 seconds that is most likely due to the tar (mixture of condensable hydrocarbons, including aromatic compounds and other oxygen (O)-containing hydrocarbons) reforming reactions and thermal cracking. The amount of olefins initially increases until gas residence time of about 5 seconds, but later decreases at extended residence times. To obtain olefins, it is important that the average residence time of the product gas in the gasification reactor does not exceed 10 seconds. Preferably, the average residence time of the product gas in the gasification reactor is in the range of 0.1 to 10 seconds, even more preferably in the range of 0.5 to 7 seconds, even more preferably in the range of 2 to 7 seconds. Alternatively, the average residence time of the product gas in the gasification reactor preferably is between 0.2 and 0.5 seconds.

The product gas obtained by the method of the current invention preferably comprises 7-40 vol.% olefins, more preferably 10-30 vol.% olefins, most preferably 10-20 vol.% based on total volume of dry and $N_2$-free product gas. Olefins preferably are ethene and/or propene.

In one preferred embodiment of the invention the method is executed in a gasification system comprising a housing 11, 12, 13 with a combustion reactor accommodating a fluidized bed 7 in operation, a riser 2 extending along a longitudinal direction of the system 1, a downcomer 3 positioned coaxially around the riser 2 and extending into the fluidized bed 7, and one or more feed channels 8 for providing the biomass to the riser 2, the riser 2 being attached to the housing 11, 12, 13 of the system 1 in a bottom part 13 of the housing 11, 12, 13, and a part of the riser 2 above the one or more feed channels 8 being moveable with respect to the downcomer 3 in the longitudinal direction of the system 1.

In one preferred embodiment of the invention benzene and toluene are obtained. Preferably, the product gas contains 5-9 % benzene and 0.5-3 % toluene, even more preferably 5.7-8.3 % benzene and 2-2.7 % toluene (as calculated in carbon yield).

### Separation methods

The product gas comprises condensable compounds and syngas compounds. Syngas compounds can be CO, $H_2$, $CO_2$ and $CH_4$ and olefins. Condensable compounds are compounds that are liquid at room temperature. Typical condensable compounds in the product gas are water, alicyclic compounds, aromatic compounds, and oxygen (O)-containing hydrocarbons. These condensable compounds can be easily removed from the product gas by condensation of these compounds. In a preferred embodiment after the indirect gasification of the biomass condensable compounds that are comprised in the product gas are removed from the product gas, preferably by condensation.

After the indirect gasification, the olefins are contained in product gas together with CO, $H_2$, $CO_2$, $CH_4$ and $C_2H_2$. Olefins can be separated by methods known in the field. See, for example, Saha, D. et. al. (2021) for overview of state of the art techniques and separations using nanoporous absorbents; CN102267850A for a method of separating light olefins gas; US5372009A for cryogenic distillation, US7060866B2 for high pressure distillation; Erickson, A. (2021) for extractive distillation. The conventional process used for separating olefins is distillation. During distillation, the components of a liquid mixture are separated by exploiting differences in boiling points. Separation is either achieved by cryogenic distillation, or by high pressure distillation. Extractive distillation can also be used when close proximity of boiling points and azeotrope formation exist (such as for $C_4$ separation). In the extraction distillation, three types of solvents are usually employed, acetonitrile (ACN), dimethylformamide (DMF) and N-methylpyrrolidone (NMP).

In a preferred embodiment of the invention, in a step of the method or the use of the invention which is after the indirect gasification of biomass, the olefins that are comprised in the product gas are separated from the product gas, preferably by distillation or adsorption, more preferably by distillation. Preferably the distillation is fractional distillation. In fractional distillation the different olefins are separately obtained. Preferably the distillation is cryogenic distillation, high pressure distillation or extractive distillation, preferably cryogenic distillation, more preferably fractional cryogenic distillation wherein preferably ethene and propene are separately obtained.

In cryogenic distillation olefins can be separated using a cold box (see for example CN105439793A). Cold boxes are brazed aluminum plate-fin heat exchangers, used for the cryogenic heat-transfer services. Exchangers are enclosed by welded sheets of carbon steel (box-shaped) which is filled with insulation (e.g., perlite) surrounding the internal equipment for robust insulative properties. A cold box will contain multiple heat exchangers assembled closely in series and/or parallel, very often in a single package unit. The gas is cooled and partially condensed in these series of heat exchangers and then the individual components of a dry cracked gas are separated in fractionation columns. In a preferred embodiment for cryogenic distillation one or more cold boxes are used as heat exchanger.

In adsorption, olefin is preferentially adsorbed in the suitably designed pores of the adsorbent leaving behind the rest of the components of the product gas. In a preferred embodiment in case the olefins are separated from the product gas by adsorption, the adsorbent is a surface modified zeolite, silica, alumina, a metal-Organic Framework (MOF), a covalent organic frameworks (COF), or a hydrogen bonded organic frameworks (HOF). More preferably, the adsorbent is carbon-nanotube doped-ZSM-58 or CuBTC (BTC = 1,3,5-benzne-tricarboxylate).

### Description of the figures

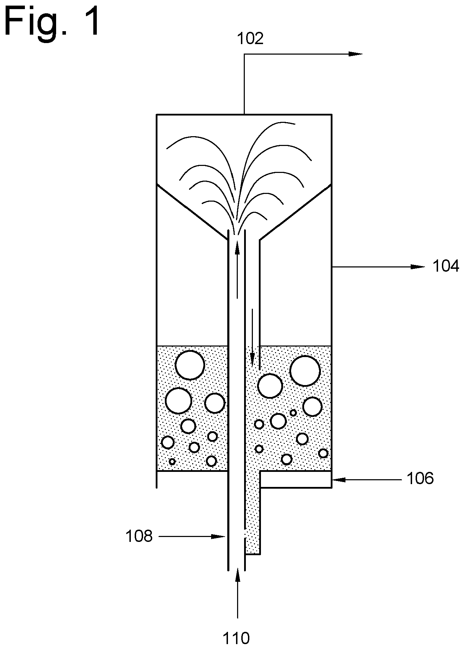

Figure 1 depicts a general scheme of gasification system that can be used to carry out the invention. The system comprises a gasification reactor, which comprises a riser stretching along the length of the gasification system, through a combustion reactor for receiving a feedstock 108 and steam 110 and a settling chamber for separating char and other solids from a product gas 102. The system further comprises a downcomer, which connects the settling chamber with the combustion reactor. The combustion reactor has an opening for an $O_2$ containing gas 106 and an opening which connects a bottom part of the combustion reactor with a riser to provide a heat within the riser. A flue gas 104 is discharged on the side of the system.

Figure 2 depicts a scheme of a MILENA indirect gasification system 1. The system comprises a housing 11, 12, 13 with a combustion reactor accommodating a fluidized bed 7 in operation, which is fluidized using fluidization system 9, a riser 2 extending along a longitudinal direction of the system 1, a downcomer 3 positioned coaxially around the riser 2 and extending over a height h1 into the fluidized bed 7, and one or more feed channels 8 for providing the biomass to the riser 2, the riser 2 being attached to the housing 11, 12, 13 of the system 1 in a bottom part 13 of the housing 11, 12, 13, and a part of the riser 2 above the one or more feed channels 8 being moveable with respect to the downcomer 3 in the longitudinal direction of the system 1. The riser 2 can further comprise a feed opening 2a for each of the one or more feed channels 8. On the bottom side of the riser 2 the system 1 comprises an ash removal device 14. The riser 2 is welded or otherwise attached to a bottom rim of the bottom part of the housing 13, indicated by 2b. The positioning elements 4 may be used to maintain the mutual position of riser 2 and downcomer 3, even under operational conditions. The top part of the system 1 comprises a top reactor wall 5 which narrows (e.g. using a funnel shaped part or separator element 5a) and attaches to a downcomer 3. The downcomer 3 can have an extending part 6 at the top, which extends in a predetermined distance L1 above the separator element 5a of the top reactor wall 5. The riser 2 can extend even further above the separator element 5a, over a length L2. Furthermore, the lower part housing 11 is provided with a flue gas outlet 15 allowing outflow of the flue gases produced in the fluid bed 7 part of the reactor 1. The flue gas outlet 15 is fitted with a pressure control element 18 in a further embodiment. At the top of the system 1 a product gas outlet 10 is provided in a top element 16 closing of the system 1 at the top. The lower part housing 11 can also be provided with an additional closeable outlet 17, which may be used to control the level and constituency of the fluidized bed 7. d1 is an outer diameter of the riser 2 and d2 is an inner diameter of the downcomer 3.

Figure 3 depicts scheme of an experimental set-up of the invention with the respective analytical measurements. The set-up comprises a indirect gasification system 300 as shown in Figure 1. The set-up further comprises two filters 318, 320, the first one 318 operating at 450 °C, the second one 320 - at 5 °C. After the first filter the set-up comprises a micro gas chromatograph ($\mu$-GC) 334 for testing the product gas and after the $\mu$-GC 334 - a gas bag 336, where gas can be collected. After the second filter 320 two KO bottles 322 are placed, after the bottles 322 the set-up comprises a gas monitoring device 324, after which another $\mu$-GC and another gas bag 326 are placed. The combustion reactor 312 is connected via a flue gas opening to a cyclone for purifying the flue gas 304 and further to a gas monitoring device 302. After the discharge the product gas 316 may be directed to an afterburner 332. The system comprises an opening for an oxygen free gas 308 and an opening for air 310.

**Examples**

*Example 1 - Method of obtaining olefins*

In example 1 indirect gasification of lipid-rich biomass is compared with other streams. Indirect gasification is carried out in a Milena reactor (figure 2), as described in WO2014/070001A1. The Milena reactor is an indirect gasification reactor in which combustion and gasification are separated. The Milena reactor is a pilot reactor. In the Milena reactor the biomass is fed together with a carrier gas (steam) to a riser. Heating in the riser is swift, and gasification of the waste stream starts in the riser. The product gas (comprising permanent gases and condensable compounds) that is formed leaves the settling chamber at the upper side of the reactor whilst the solid products are separated in the settling chamber and leave the settling chamber at the bottom. These solid reaction products enter a combustion reactor that is fed with air. In Milena reactor a fluidized bed reactor acts as a combustion reactor. Sand is used as the standard bed material because it is cheap and resistant to abrasion. The use of catalytic bed material (like olivine or dolomite) in the MILENA is also possible. The combustion envelops the riser which leads to an efficient heat transfer from combustion reactor to the waste stream feed therewith heating the feed to the required gasification temperature. For the current invention, the specific design of the reactor with regards to heat transfer and the combustion of the solid reaction products leaving the gasification reactor are not relevant. Instead, the selection of the feed and gasification conditions such as residence time and temperature contribute to the effect observed.

Analytical methods

For the monitoring of the product gas an online micro gas chromatograph ($\mu$-GC) was placed after MILENA at product gas outlet. Additionally, gas bag samples were taken for off-line gas chromatography flame Ionization detector (GC-FID) analysis ($C_1$-$C_5$ and $H_2$) and liquid samples for tar analysis at this same position. For specific conditions wet chemical analysis was performed for $NH_3$ and HCN. Flue gas leaving the combustion chamber of the MILENA reactor was also monitored with an online compact gas chromatograph.

To calculate the feeding rate of the biomass, feeding bunkers were calibrated before the starting of the tests to provide an indication of the feeding screw rotation to be applied. At the same time the actual amount of feedstock consumed during the experiment was quantified by weighing the feedstock at the beginning and at the end of the experiment.

The product yields are expressed in terms of carbon yield, calculated according to the following equation:

$$Carbon\ Yield\ \%, i = \frac{Carbon_{i,product}}{Carbon_{total,feedstock}} \times 100$$

Method

The method of the invention was performed in Milena reactor as depicted in Fig. 2 and as described in WO2014/070001A1. Exhausted olive pomace was chosen as a lipid-rich biomass with a low O content. Exhausted olive pomace was fed to a riser (2) through a feed channel (8) with a feed rate of approximately 4.7 kg/h together with steam. The steam to carbon ratio (StC) was kept constant at around 0.8 kg/kg. For the calculation of the StC the steam that was added as carrier gas as well as the moisture content present in the feedstock was used for the calculation. Gasification took place at three different temperatures (see Table 1).

The average residence time of the product gas in the Milena reactor was about 5 seconds, not exceeding 10 seconds. The residence time of the product gas was determined by pulse tests.

The heat transport was ensured by the internal circulation of bed material between a combustion reactor accommodating a fluidized bed 7 and the riser 2. The remnants of the gasification process (char and bed material) were separated from a product gas and transported via the top system wall 5 and downcomer 3 into the fluidized bed 7, where further combustion took place. The energy from this process was used to heat up the riser 2 for the gasification process. Carbon that entered the combustion reactor is a flue gas. The product gas was collected at a discharge opening 10.

Product yield analysis

The process described above was reproduced applying three different gasification temperatures. Table 1 shows results achieved in terms of carbon yield of ethene, propene, benzene, toluene, carbon monoxide, carbon dioxide and methane for exhausted olive pomace.

The use of a lipid-rich feedstock with a low O content results in a valuable mix of chemicals that can be used as starting materials. The product gas contains not only olefins but also CO, $CO_2$ and $CH_4$. The composition can be steered by varying the temperature towards specific components. As can be seen, by increasing temperature, the amount of CO, $CO_2$ and $CH_4$ also increases. There is an optimum in ethene at a temperature of 775 °C, whilst an optimum in propene is achieved at a temperature of 710 °C. It can be seen that when the temperature is further increased (to 840 °C), the yield of ethene decreases. The highest yield of propene is achieved at 710 °C and decreases with higher temperature.

*Table 1: Carbon yield of ethene, propene, benzene, toluene, carbon monoxide, carbon dioxide and methane for exhausted olive pomace.*

|  | **710 °C** | **775 °C** | **840 °C** |
|---|---|---|---|
| **$C_2H_4$** | 9.4 % | 11.3 % | 10.1 % |
| **$C_3H_6$** | 3.7 % | 1.9 % | 0.6 % |
| **Total olefins** | 15.8 % | 14.4 % | 11% |
| **Benzene** | 5.7 % | 8.3 % | 8.0 % |
| **Toluene** | 2.7 % | 2.6 % | 1.0 % |
| **CO** | 15.1 % | 17.9 % | 17.1 % |
| **$CO_2$** | 8.6 % | 9.2 % | 10.3 % |
| **$CH_4$** | 8.2 % | 9.9 % | 10.1 % |

The same test as described above was carried out with black pellets obtained from wet torrefaction of sewage sludge. Two different gasification temperatures were tested. Table 2 shows results achieved in terms of carbon yield of ethene, propene, carbon monoxide, carbon dioxide and methane for black pellets.

*Table 2: Carbon yield of ethene, propene, carbon monoxide, carbon dioxide and methane for black pellets*

|  | **750 °C** | **810 °C** |
|---|---|---|
| **$C_2H_4$** | 11.1 % | 12.1 % |
| **$C_3H_6$** | 3.0 % | 1.6 % |
| **Total olefins** | 16.3 % | 14.9 % |
| **CO** | 8.1 % | 9.5 % |
| **$CO_2$** | 6.1 % | 9.6 % |
| **$CH_4$** | 6.8 % | 8.4 % |

Comparing example A

The results obtained with an exhausted olive pomace (expressed in *volume % based on total volume of dry and $N_2$ free product gas)* in a pilot setup were compared with the results obtained with a waste wood, treated according to the similar process described in PCT/NL2023/050271 and treated in the same way as the exhausted olive pomace. The comparison is shown in Table 3.

*Table 3: Comparison of the ethene, propene, carbon monoxide, methane and total olefin content described in PCT/ NL2023/050271 and the ethene, propene, carbon monoxide, methane and total olefin content reached in the indirect gasification tests of exhausted olive pomace, black pellets and waste wood, amounts in volume % based on total volume of dry and $N_2$ free product gas.*

|  | **Waste wood** | **Waste wood** | **Exhausted olive pomace** | **Black pellets** |
|---|---|---|---|---|
| Process | PCT/NL2023/050271 | Milena | Milena | Milena |
| T | 750 °C | 775 °C | 775 °C | 750 °C |
| **$C_2H_4$** | 5.2 vol.% | 4.6 vol.% | 9.8 vol.% | 12.9 vol.% |
| **$C_3H_6$** | 0.0 vol.% | 0.3 vol.% | 1.1 vol.% | 2.3 vol.% |
| **Total olefins** | 5.2 vol.% | 5.0 vol.% | 11.4 vol.% | 16.1 vol.% |
| **CO** | 10 vol.% | 39.4 vol.% | 31.1 vol.% | 18.7 vol.% |
| **$CH_4$** | 18 vol.% | 13.1 vol.% | 17.3 vol.% | 15.7 vol.% |

The elemental content of the feedstock was also analysed. Results are shown in Table 4. The elements C, N and H are measured according to the standard NEN-EN-ISO-16948, as published in 2015. The element O is measured according to the standard NEN-EN-17351, as published in 2020.

*Table 4: Analysis of feedstock (exhausted olive pomace, black pellets and waste wood) used for tests, amounts in wt.% on total of dry and ash free weight of the biomass.*

|  | **Waste wood** | **Exhausted olive pomace** | **Black pellets** |
|---|---|---|---|
| **C** | 50 | 56 | 61 |
| **N** | 1 | 2 | 4 |
| **H** | 5 | 7 | 8 |
| **O** | 44 | 32 | 32 |

It can be seen that using a biomass with a low O level for indirect gasification, where product gas residence time does not exceed 10 seconds, ethene and propene yields can be significantly increased. It can be seen that the lesser O is present within the feedstock, the more ethene and propene is released.

*Example 2 - Gas residence time measurements*

The gas residence time may be measured by placing sampling points at different points in a reactor along its height as well as at the discharge opening of the reactor. At the discharge opening the gas sample is collected after undergoing conversion and contains combustible gases such as CO, $H_2$ and $CH_4$. Steam velocity is calculated, taking into account the amount ($m^3$/h) of steam introduced in the reactor, a cross sectional area of the reactor and a temperature. A biomass feeding rate may be calculated as described in Example 1.

The residence time influence on propene yield is shown in Table 5. Table 5 shows carbon yield of propene at three different residence times in seconds.

*Table 5: Influence of residence time (in seconds) on carbon yield (percentage) of propene*

|  | 0.5 s | 5s | 9s |
|---|---|---|---|
| **Carbon yield** | 3.8 % | 2.1 % | 1.9 % |

By increasing the residence time propene yield decreases.

## Claims

1. A method for indirect gasification of biomass with a low oxygen (O) content, comprising:

   a) providing a biomass feed with a low oxygen (O) content to a gasification reactor,
   b) indirect gasification of the biomass with a low oxygen (O) content at a temperature in the range of 600-900 °C thereby obtaining a product gas and a treated biomass,

   wherein the product gas comprises at least 7 vol.% olefins based on total volume of dry and $N_2$-free product gas and wherein the average residence time of the product gas in the gasification reactor does not exceed 10 seconds and wherein the biomass with a low oxygen (O) content comprises less than 40 wt.% O on total dry and ash free weight of the biomass.

2. Use of biomass with a low oxygen (O) content for producing a product gas comprising olefins, wherein the biomass is provided to a gasification reactor and wherein the biomass is indirectly gasified in the gasification reactor at a temperature in the range of 600-900 °C thereby obtaining the product gas and a treated biomass, wherein the product gas comprises at least 7 vol.% olefins based on total volume of dry and $N_2$-free product gas and wherein the average residence time of the product gas in the gasification reactor does not exceed 10 seconds and wherein the biomass with a low oxygen (O) content comprises less than 40 wt.% O on total dry and ash free weight of the biomass.

3. The method according to claim 1 or the use according to claim 2, wherein the olefins comprise ethene and/or propene.

4. The method or use according to any one of the preceding claims, wherein the product gas comprises 7-40 vol.% olefins based on total volume of dry and $N_2$-free product gas, preferably 10-30 vol.%, more preferably 10-20 vol.%.

5. The method or use according to any one of the preceding claims, wherein the oxygen (O) content of the biomass with a low oxygen (O) content is in the range of 10-40 wt. % oxygen on total dry and ash free weight of the biomass, more preferably 15-35 wt.% oxygen on total dry and ash free weight of the biomass.

6. The method or use according to any one of the preceding claims, wherein the biomass with a low oxygen (O) content is gasified at a temperature in the range of 650-850 °C, preferably in the range of 700-825 °C, more preferably in the range of 725-800 °C.

7. The method or use according to any one of the preceding claims, wherein the average residence time of the product gas in the gasification reactor is in the range of 0.1 to 10 seconds, preferably in the range of 0.5 to 7 seconds, more preferably in the range of 2 to 7 seconds.

8. The method or use according to any one of the preceding claims, wherein no $O_2$ is provided to the gasification reactor.

9.   The method or use according to any one of the preceding claims, wherein steam is provided to the gasification reactor in a steam to carbon ratio in the range of 0.1-2 kg/kg, preferably 0.4-1.5 kg/kg, more preferably in the range of 0.6-1.2 kg/kg.

10.  The method or use according to any of the preceding claims, wherein the gasification reactor is a fluidized bed, preferably wherein steam is the fluidizing gas.

11.  The method or use according to any of the preceding claims, wherein at least a part of the treated biomass is combusted, and at least a part of the combustion heat is used to heat the feed to the gasification reactor.

12.  The method or use according to any of the preceding claims, wherein the method is carried out in a gasification system comprising a housing (11, 12, 13) with a combustion reactor accommodating a fluidized bed (7) in operation, a riser (2) extending along a longitudinal direction of the system (1), a downcomer (3) positioned coaxially around the riser (2) and extending into the fluidized bed (7), and one or more feed channels (8) for providing the biomass with a low oxygen (O) content to the riser (2), the riser (2) being attached to the housing (11, 12, 13) of the system (1) in a bottom part (13) of the housing (11, 12, 13), and a part of the riser (2) above the one or more feed channels (8) being moveable with respect to the downcomer (3) in the longitudinal direction of the reactor (1).

13.  The method or use according to any of the preceding claims, wherein the biomass with a low oxygen (O) content is lipid-rich biomass and/or torrefied biomass.

14.  The method or use according to claim 13, wherein the lipid content of the lipid-rich biomass is in the range of 2-30 wt.% on total dry weight of the lipid-rich biomass, preferably 4-25 wt.%, more preferably 5-15 wt.%.

15.  The method according to claim 13 or 14, wherein the lipid-rich biomass is selected from the list of olive pomace, preferably exhausted olive pomace, sunflower husks, cashew shells, coconut shells, rapeseed residues and any combination thereof, preferably wherein the lipid-rich biomass is olive pomace, preferably exhausted olive pomace.

# Fig. 1

# Fig. 2

Fig. 3

Europäisches
Patentamt

European
Patent Office

Office européen
des brevets

**EUROPEAN SEARCH REPORT**

**Application Number**

**EP 24 18 4033**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 678 860 A (KUESTER JAMES L [US]) 7 July 1987 (1987-07-07) * column 5, line 21 - line 26; claims 1,3,5,7; example 1; table A * * column 7, line 61 - line 68 * * column 3, line 39 - column 4, line 42 * ----- | 1-15 | INV. C10G1/00 |
| X | VREUGDENHIL B J ET AL: "Closing the loop: Chemical composition and economics of building blocks/monomers from indirect gasification of waste", SETTING THE COURSE FOR A BIOBASED ECONOMY : PAPERS OF THE 25TH EUROPEAN BIOMASS CONFERENCE : EXTRACTED FROM THE PROCEEDINGS OF THE INTERNATIONAL CONFERENCE HELD IN STOCKHOLM, SWEDEN : 12-15 JUNE 2017, ETA-FLORENCE RENEWABLE ENERGIES, ITA, 1 June 2017 (2017-06-01), pages 416-420, XP009541039, ISSN: 2282-5819, DOI: 10.5071/25THEUBCE2017-2BO.2.1 * paragraphs [0002], [0004]; figures 1,5; tables 1-3 * ----- -/-- | 1-15 | |

| | |
|---|---|
| | TECHNICAL FIELDS SEARCHED (IPC) |
| | C10G |

The present search report has been drawn up for all claims

| Place of search | Date of completion of the search | Examiner |
|---|---|---|
| The Hague | 15 November 2024 | Deurinck, Patricia |

EPO FORM 1503 03.82 (P04C01)

page 1 of 2

| | Europäisches Patentamt<br>European Patent Office<br>Office européen des brevets | **EUROPEAN SEARCH REPORT** | **Application Number**<br>**EP 24 18 4033** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Grootjes ET AL: "Gasification of plastics-containing residue streams: product gas composition and economics of biochemicals/monomers retrieval/co-production",<br>,<br>28 November 2018 (2018-11-28), pages 1-29, XP093224761,<br>Retrieved from the Internet:<br>URL:https://publications.tno.nl/publicatio n/34627292/DavqCX/TNO-2018-R11007.pdf<br>* page 28 - page 29; figure 1; tables 1,2 *<br>* paragraphs [0001], [0003] *<br>----- | 1-15 | |
| X | US 2010/270506 A1 (GOETSCH DUANE A [US] ET AL) 28 October 2010 (2010-10-28)<br>* paragraphs [0026], [0050]; claims 1,4; figure 1 *<br>----- | 1,3-15 | |
| | | | **TECHNICAL FIELDS SEARCHED (IPC)** |

The present search report has been drawn up for all claims

| Place of search | Date of completion of the search | Examiner |
|---|---|---|
| The Hague | 15 November 2024 | Deurinck, Patricia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................................

& : member of the same patent family, corresponding document

## ANNEX TO THE EUROPEAN SEARCH REPORT
## ON EUROPEAN PATENT APPLICATION NO.

EP 24 18 4033

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2024

| Patent document cited in search report | | Publication date | Patent family member(s) | | Publication date |
|---|---|---|---|---|---|
| US 4678860 | A | 07-07-1987 | AT | E74152 T1 | 15-04-1992 |
| | | | BR | 8604815 A | 30-06-1987 |
| | | | CA | 1252802 A | 18-04-1989 |
| | | | EP | 0221679 A2 | 13-05-1987 |
| | | | ES | 2031067 T3 | 01-12-1992 |
| | | | GR | 3004625 T3 | 28-04-1993 |
| | | | JP | S62169887 A | 27-07-1987 |
| | | | US | 4678860 A | 07-07-1987 |
| US 2010270506 | A1 | 28-10-2010 | US | 2010269411 A1 | 28-10-2010 |
| | | | US | 2010270506 A1 | 28-10-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20230234843 A1
- WO 2012059938 A1
- WO 2014070001 A1
- WO 2016091828 A1
- WO 2013162355 A1
- CN 102267850 A
- US 5372009 A
- US 7060866 B2
- CN 105439793 A
- NL 2023050271 W